# EUROPEAN PATENT SPECIFICATION

(11) **EP 1 463 211 B1**
(45) Date of publication and mention of the grant of the patent: **31.05.2006**
(21) Application number: 03006718.5
(22) Date of filing: 24.03.2003
(51) Int. Cl.: H04B 1/38, H01Q 1/24, H04M 1/02

(54) **Portable radiotelephone with reduced specific absorption rate**
Tragbares Funktelefon mit reduzierter spezifischer Absorptionsrate
Radiotéléphone portable avec un taux d'absorption spécifique diminué

(43) Date of publication of application: 29.09.2004
(73) Proprietor: SAMSUNG ELECTRONICS CO. LTD., Suwon-city, Kyounggi-do 441-742 (KR)
(72) Inventor: Hwang, Jae-Ho, Suwon-city, Kyungki-do (KR); Lee, Jae-Min, Suwon-city, Kyungki-do (KR); Jeong, Yong-Seong, Suwon-city, Kyungki-do (KR)
(74) Representative: Grünecker, Kinkeldey, Stockmair & Schwanhäusser Anwaltssozietät

(56) References cited:
- EP-A- 1 292 042
- US-A1- 2002 095 079
- US-B1- 6 272 324

## Description

The present invention relates generally to a portable radiotelephone, and in particular, to an SAR (Specific Absorption Rate) reduction apparatus for a folder-type portable radiotelephone, for reducing high current density radiated from an antenna device through a contact portion between a main body and a subbody.

With the recent popularization of portable radiotelephones and the rapid development of the electronics industry, various devices for shielding electromagnetic waves that are harmful to the human body or reducing a specific absorption rate (SAR) have been proposed. Particularly, in EMI (electromagnetic interference) standard for body protection, the SAR serves as a measure indicating an amount of electromagnetic waves absorbed into the human body (especially the head).

Generally, a portable radiotelephone is used in contact with the human body during a call, so the SAR is affected by a near field of electromagnetic waves radiated from an antenna device of the radiotelephone. Therefore, the SAR is closely related to transmission power, antenna characteristics, and a mechanical structure of the radiotelephone.

In order to reduce the SAR, various methods have been proposed, such as using a unidirectional antenna, and attaching a separate conductive plate onto the radiotelephone or inserting an electromagnetic wave absorbing substance into the radiotelephone to shield electromagnetic waves.

However, the former method of using a unidirectional antenna is very complex in structure and is disadvantageous to the miniaturization and compactness of the radiotelephone. The latter method using an electromagnetic wave shielding substance or an electromagnetic wave absorbing substance has a different effect according to characteristics of the substances and their attachment positions, and has a complicated manufacturing process.

EP-A-1 292 042 relates to a foldable portable phone with metal casing, shielding links and a second antenna to control radiation. The foldable telephone comprises means to minimize the SAR level when the telephone is unfolded. Both the main housing and the folding housing can be made of metal, shields can be included in both casings or a second antenna can be included to minimize the radio frequency radiation emitted towards the user's head. The body housing and the folder housing are metal cases, a hinge device rotatably connects the housings, and a contact portion makes contact between the housings when the folder housing is completely opened from the body housing. Alternatively, the usage of a first and a second antenna portion is disclosed, the antenna portions are switched by means of an electrical switch. The folder housing has to be completely opened away from the body housing to achieve that the electrical switch turns on the second antenna. Alternatively, a folder type portable phone comprises an electrical switch for switching on or off the first and second ground portion.

US-B1-6 272 324 relates to electrical connection for a telephone with a hinge cover. An electrical connector establishes electrical connection between the transceiver electronics in a main body of the phone and remote electrical components contained in a movable cover when the hinged cover is either in the opened or closed position or by means of a commutating contact.

In most cases, although a portion where an LCD (Liquid Crystal Display) module is mounted on a subbody of the folder-type radiotelephone is coated with an electromagnetic wave shielding substance, strong electromagnetic waves radiated from an antenna device are undesirably discharged through a gap between a main body and a subbody of the radiotelephone. Of course, though a flexible printed circuit board (FPC) is installed to electrically connect an LCD module mounted on the subbody to a printed circuit board (or an RF (Radio Frequency) board) mounted on the main body, the installation of the FPC is not sufficient to reduce the strong electromagnetic waves radiated from the antenna device to the outside of the radiotelephone.

It is, therefore, the object of the present invention to provide an apparatus and method for reducing a specific absorption rate (SAR) of a folder-type portable radiotelephone, wherein an adjacent structure of an antenna device is so improved as to reduce high current density radiated from the antenna device.

This object is solved by the invention as claimed in the independent claims.

Preferred embodiments are defined in the dependent claims.

It is an advantage of the present invention to provide an SAR reduction apparatus for a folder-type portable radiotelephone, formed to reduce high current density radiated from an antenna device to a mechanical surface of the radiotelephone.

It is further another advantage of the present invention to provide an SAR reduction apparatus for a folder-type portable radiotelephone, formed in such a way that the SAR reduction apparatus is enabled when a subbody of the radiotelephone is unfolded.

To achieve the above objects and advantages, there is provided a folder-type portable radiotelephone having a main body including a printed circuit board, and a subbody including an LCD (Liquid Crystal Display) module, wherein the subbody is connected to the main body so that the subbody can be folded against and unfolded from the main body by a hinge device. The radiotelephone comprises at least one connection device mounted on a portion where the main body meets with the subbody. The connection device electrically connects a grounding portion of the printed circuit board mounted on the main body to a grounding portion of the LCD module mounted on the subbody when the radiotelephone is folded and unfolded.

The present invention will become more apparent from the following detailed description when taken in conjunction with the accompanying drawings in which:
FIG. 1 is a perspective view illustrating a conventional folder-type portable radiotelephone;
FIGS. 2A to 2C are cross-sectional views illustrating a proposed SAR reduction apparatus for a folder-type portable radiotelephone according to a first embodiment of the present invention, wherein a ball plunger is applied;
FIG. 3 is a cross-sectional view illustrating an SAR reduction apparatus for a folder-type portable radiotelephone according to a second embodiment of the present invention, wherein a plate spring is applied;
FIG. 4 is a cross-sectional view illustrating a SAR reduction apparatus for a folder-type portable radiotelephone according to a third embodiment of the present invention, wherein a rotatable metal link is applied;
FIGs. 5A and 5B illustrate distribution of electric field strength at an adjacent portion of an antenna device of a conventional radiotelephone and a proposed radiotelephone, respectively; and
FIGS. 6A and 6B illustrate radiation patterns of a conventional radiotelephone and a proposed radiotelephone, respectively.

Several preferred embodiments of the present invention will now be described in detail with reference to the annexed drawings. In the drawings, the same or similar elements are denoted by the same reference numerals even though they are depicted in different drawings. In the following description, detailed descriptions of known functions and configurations incorporated herein have been omitted for conciseness.

According to the present invention, an electric connection device is mounted on an adjacent portion of an antenna device, where a subbody of a folder-type portable radiotelephone contacts with a main body of the radiotelephone, in order to reduce current density that is radiated to the outside of the radiotelephone, thereby contributing to a drastic reduction in a specific absorption rate (SAR) into the human body. Specifically, the present invention provides a structure for electrically connecting a grounding portion of a first module of the main body to a grounding portion prepared in a second module of the subbody. Preferably, the present invention provides a structure for electrically connecting a grounding portion of the first module included in the main body to a grounding portion of the second module included in the subbody constantly. Preferably, the present invention provides a structure for electrically connecting a grounding portion of the first module included in the main body to a grounding portion of the second module included in the subbody while the subbody is unfolded from the main body. The first module can be a printed circuit board serving as an RF board mounted on the main body, and the second module can be an LCD module mounted on the subbody. Hereafter, the several preferred embodiments of the present invention are described with the printed circuit board as an example of the first module, and with the LCD module as an example of the second module.

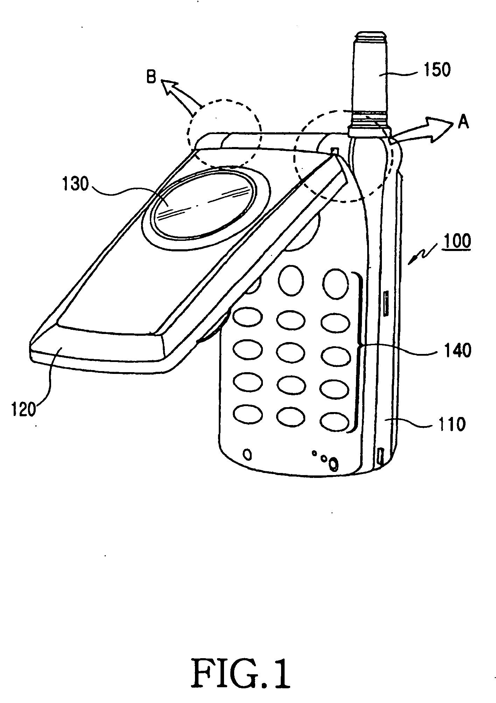

FIG. 1 is a perspective view illustrating a structure of a general folder-type portable radiotelephone. Referring to FIG. 1, a folder-type portable radiotelephone 100 includes a main body 110 with an upper casing frame and a lower casing frame, a subbody 120 connected to the main body 110 in such a way that it can be folded and unfolded to/from the main body 110 by a hinge operation, an LCD module (or display device) 130 mounted on the subbody 120, a keypad 140 having a plurality of key buttons mounted on the main body 110 to input data, and an antenna device 150 installed in the main body 110.

An adjacent portion of the antenna device 150, i.e., a portion (represented by A and B in FIG. 1) where the main body 110 meets with the subbody 120, is a portion that receives most of the high current density radiated from the antenna device 150. In particular, the portion A nearest to the antenna device 150 becomes a portion where the human body is most significantly affected by the electromagnetic waves during a call due to the high current density.

Therefore, an SAR reduction apparatus proposed by the present invention should be mounted on the portion A of FIG. 1. Preferably, the SAR reduction apparatus should be mounted on both the portion A and the portion B of FIG. 1.

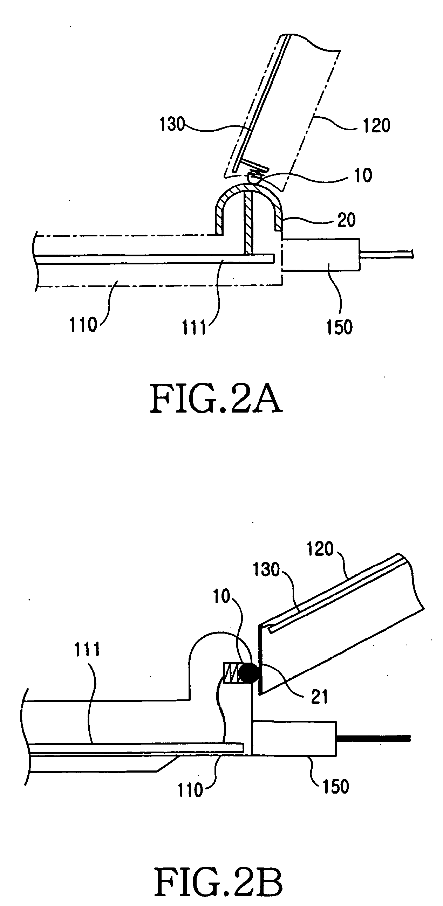

FIGS. 2A to 2C are cross-sectional views illustrating a proposed SAR reduction apparatus for a folder-type portable radiotelephone according to a first embodiment of the present invention, wherein a ball plunger is applied. Referring to FIG. 2A, a ball plunger 10 with a spring is mounted on the subbody 120, and a metal plate 20 is mounted on the main body 110 so that the metal plate 20 can be constantly electrically connected to the ball plunger 10, a portion of which is protruded from the subbody 120. The metal plate 20 can be exposedly mounted on a hinge arm of the main body 110. The ball plunger 10 is electrically connected to a grounding means of the subbody 120, and the metal plate 20 is also electrically connected to a grounding means of a printed circuit board 111 of the main body 110. For the electrical grounding, both ends of a particular conducting wire or an FPC (Flexible Printed Circuit board) can be connected by soldering. For example, the grounding means of the subbody 120 represents a grounding portion of the LCD module, and the grounding means of the main body 110 represents a printed circuit board.

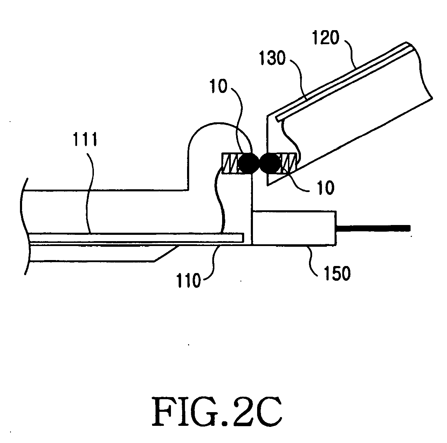

In an alternative embodiment of FIG. 2B, a ball plunger 10 is mounted on the main body 110, and a metal plate 21 is mounted on the subbody 120. In another alternative embodiment of FIG. 2C, ball plungers 10 are separately mounted on the main body 110 and the subbody 120. Both of the ball plungers 10 are electrically connected to their associated grounding portions while the subbody 120 is unfolded from the main body 110.

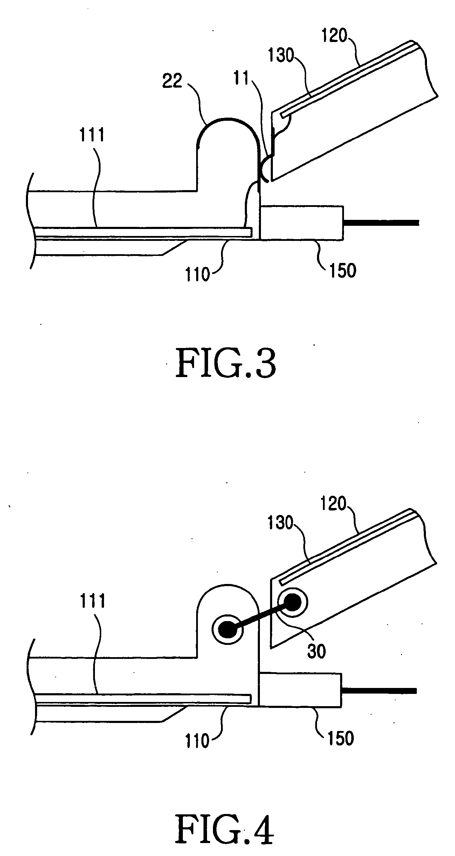

FIG. 3 is a cross-sectional view illustrating an SAR reduction apparatus for a folder-type portable radiotelephone according to a second embodiment of the present invention, wherein a plate spring is applied. Referring to FIG. 3, a plate spring 11 is mounted on the subbody 120, and a metal plate 22 is mounted on the main body 110 in such a way that the metal plate 22 is constantly electrically connected to the plate spring 11. The plate spring 11 is electrically connected to a grounding portion of the LCD module 130 mounted on the subbody 120, and the metal plate 22 is also electrically connected to a grounding portion of a printed circuit board 111 of the main body 110.

On the contrary, though not illustrated, the plate spring can be mounted on the main body and the metal plate can be mounted on the subbody. In addition, if possible, plate springs can be mounted on both the main body and the subbody.

FIG. 4 is a cross-sectional view illustrating a SAR reduction apparatus for a folder-type portable radiotelephone according to a third embodiment of the present invention, wherein a rotatable metal link is applied. Referring to FIG. 4, a metal link 30 is mounted on a particular side of the radiotelephone. Both ends of the metal link 30 are rotatably mounted on the main body 110 and the subbody 120, respectively. One end of the metal link 30 is electrically connected to a grounding portion of the printed circuit board 111 mounted on the main body 110, and another end of the metal link 30 is electrically connected to a grounding portion of the LCD module 130 mounted on the subbody 120, so the grounding portion of the main body 110 is constantly electrically connected to the grounding portion of the subbody 120. Preferably, the metal link 30 is mounted on a particular portion adjacent to the antenna device 150 of the radiotelephone.

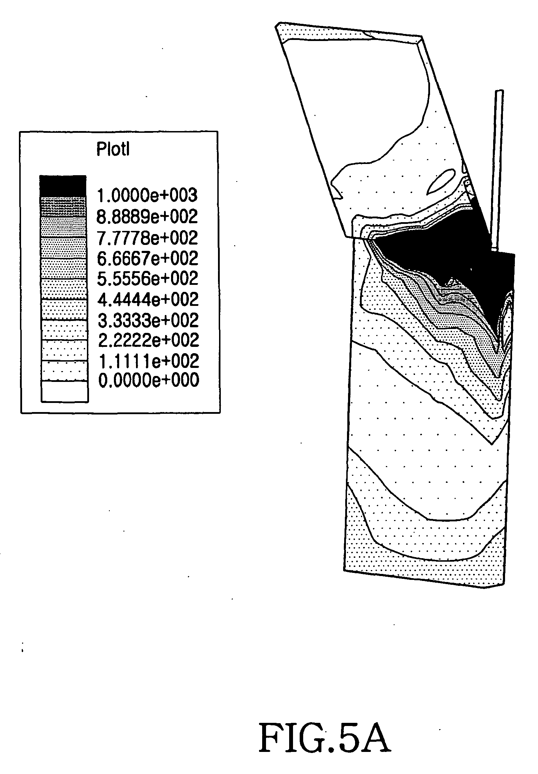

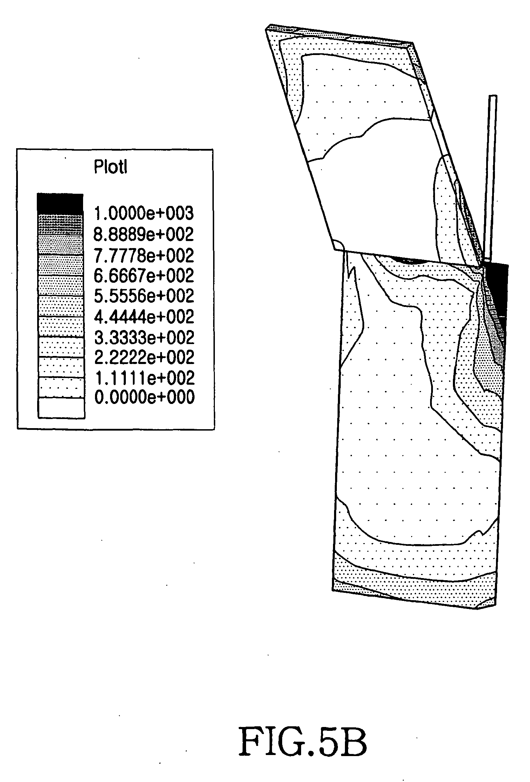

FIGS. 5A and 5B illustrate distribution of electric field strength at an adjacent portion of an antenna device of a conventional radiotelephone and a proposed radiotelephone of the present invention, respectively. Compared with the conventional radiotelephone of FIG. 5A, the proposed radiotelephone of FIG. 5B with the SAR reduction apparatus has remarkably low electric field strength.

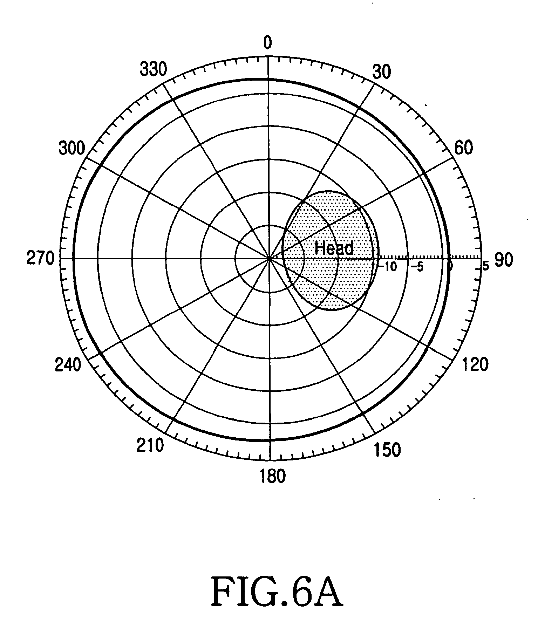

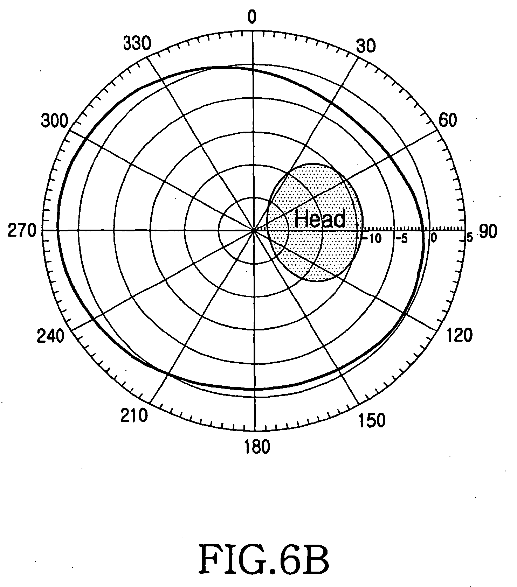

FIGS. 6A and 6B illustrate radiation patterns of a conventional radiotelephone and a proposed radiotelephone, respectively. Compared with the conventional radiotelephone of FIG. 6A, the proposed radiotelephone of FIG. 6B with the SAR reduction apparatus has remarkably low radiation in a direction of the human body.

As described above, an SAR reduction apparatus proposed by the present invention contributes to the miniaturization and compactness of a radiotelephone. In addition, the proposed SAR reduction apparatus is simple in structure, and efficiently reduces SAR.

While the invention has been shown and described with reference to certain preferred embodiments thereof, it will be understood by those skilled in the art that various changes in form and details may be made therein without departing from the scope of the invention as defined by the appended claims. For example, any other structure for electrically connecting a grounding portion of the main body to a grounding portion of the subbody can be applied to the radiotelephone.

## Claims

1. A portable radiotelephone (100) having a main body (110) including a first module, and a subbody (120) including a second module, wherein the subbody is connected to the main body so that the subbody (120) can be folded against and unfolded from the main body (110), the radiotelephone (100) comprising:
at least one connection device mounted on a portion where the main body (110) meets with the subbody (120), wherein the connection device permanently electrically connects a grounding portion of the first module included in the main body (110) to a grounding portion of the second module included in the subbody (120).

2. The portable radiotelephone (100) of claim 1, wherein the connection device comprises:
a ball plunger (10) mounted on the main body (110) so that the ball plunger is electrically connected to the grounding portion of the first module; and
a metal plate (21) mounted on the subbody (120) so that the metal plate (21) is electrically connected to the ball plunger (10) mounted on the main body (110) and is also electrically connected to the grounding portion of the second module included in the subbody (120).

3. The portable radiotelephone (100) of claim 1, wherein the connection device comprises:
a metal plate (20) mounted on the main body (110) so that the metal plate (20) is electrically connected to the grounding portion of the first module; and
a ball plunger (10) mounted on the subbody (120) so that the ball plunger (10) is electrically connected to the metal plate (20) mounted on the main body (110) and is also electrically connected to the grounding portion of the second module included in the subbody (120).

4. The portable radiotelephone (100) of claim 1, wherein the connection device comprises:
a plate spring mounted on the main body (110) so that the plate spring is electrically connected to the grounding portion of the first module; and
a metal plate mounted on the subbody (120) so that the metal plate is electrically connected to the plate spring mounted on the main body (110) and is also electrically connected to the grounding portion of the second module included in the subbody (120).

5. The portable radiotelephone (100) of claim 1, wherein the connection device comprises:
a metal plate (22) mounted on the main body (110) so that the metal plate (22) is electrically connected to the grounding portion of the first module ; and
a plate spring (11) mounted on the subbody (120) so that the plate spring (11) is electrically connected to the metal plate (22) mounted on the main body (110) and is also electrically connected to the grounding portion of the second module included in the subbody (120).

6. The portable radiotelephone (100) of claim 1, wherein the connection device comprises:
a metal link (30), wherein a first end of the metal link is mounted on the main body (110) so that the first end is electrically connected to the grounding portion of the first module, and a second end of the metal link is mounted on the subbody (120) so that the second end is electrically connected to the grounding portion of the second module.

7. The portable radiotelephone (100) of one of claims 1 to 6, wherein the connection device is mounted on a portion adjacent to an antenna device (150) included in the radiotelephone (100).

8. The portable radiotelephone (100) of one of claims 1 to 7, wherein the first module is a printed circuit board.

9. The portable radiotelephone (100) of one of claims 1 to 8, wherein the second module is an LCD (Liquid Crystal Display) module.

10. The portable radiotelephone (100) of claim 1, wherein the connection device electrically connects a grounding portion of the first module included in the main body (110) to a grounding portion of the second module included in the subbody (120) while the subbody (120) is unfolded from the main body (110).

## Patentansprüche

1. Ein tragbares Funktelefon (100) bestehend aus einem Hauptgehäuse, (110) das ein erstes Modul beinhaltet, und einem Untergehäuse (120); das ein zweites Modul beinhaltet, wobei das Untergehäuse mit dem Hauptgehäuse derart verbunden ist, so dass das Untergehäuse (120) auf das Hauptgehäuse zu und vom Hauptgehäuse weg gefaltet werden kann, das Funktelefon (100) beinhaltet:
mindestens eine Verbindungseinheit, befestigt an einer Stelle, an der das Hauptgehäuse (110) auf das Untergehäuse (120) trifft, wobei die Verbindungseinheit ein Erdungsteil des ersten Moduls, welches in dem Hauptgehäuse (110) enthalten ist, dauerhaft elektrisch mit einem Erdungsteil des zweiten Moduls, welches in dem Untergehäuse (120) enthalten ist, verbindet.

2. Das tragbare Funktelefon (100) entsprechend Anspruch 1, wobei die Verbindungseinheit beinhaltet:
einen Kugelstempel (10), der an dem Hauptgehäuse (110) angebracht ist, so dass der Kugelstempel mit dem Erdungsteil des ersten Moduls elektrisch verbunden ist; und
eine Metallplatte (21), die an dem Untergehäuse (120) angebracht ist, so dass die Metallplatte (21) mit dem Kugelstempel (10), der an dem Hauptgehäuse (110) angebracht ist, elektrisch verbunden ist, sowie ebenfalls mit dem Erdungsteil des zweiten Moduls, welches in dem Untergehäuse (120) enthalten ist, elektrisch verbunden ist.

3. Das tragbare Funktelefon (100) entsprechend Anspruch 1, wobei die Verbindungseinheit beinhaltet:
eine Metallplatte (20), die an dem Hauptgehäuse (110) angebracht ist, so dass die Metallplatte (20) mit dem Erdungsteil des ersten Moduls elektrisch verbunden ist; und
ein Kugelstempel (10), der an dem Untergehäuse (120) angebracht ist, so dass der Kugelstempel (10) mit der Metallplatte (20), die an dem Hauptgehäuse (110) angebracht ist, elektrisch verbunden ist und ebenso mit dem Erdungsteil des zweiten Moduls, welches in dem Untergehäuse (120) enthalten ist, elektrisch verbunden ist.

4. Das tragbare Funktelefon (100) entsprechend Anspruch 1, wobei das Erdungsteil beinhaltet:
eine Blattfeder, die an dem Hauptgehäuse (110) angebracht ist, so dass die Blattfeder mit dem Erdungsteil des ersten Moduls elektrisch verbunden ist; und
eine Metallplatte, die an dem Untergehäuse (120) angebracht ist, so dass die Metallplatte mit der Blattfeder, die an dem Hauptgehäuse (110) angebracht ist, elektrisch verbunden ist und ebenso mit dem Erdungsteil des zweiten Moduls, welches in dem Untergehäuse (120) enthalten ist, elektrisch verbunden ist.

5. Das tragbare Funktelefon (110) entsprechend Anspruch 1, wobei die Verbindungseinheit beinhaltet:
eine Uletallplatte (22), die an dem Hauptgehäuse (110) angebracht ist, so dass die Metallplatte (22) mit dem Erdungsteil des ersten Moduls elektrisch verbunden ist; und
eine Blattfeder (11), die an dem Untergehäuse (120) angebracht ist, so dass die Blattfeder (11) mit der Metallplatte (22), die an dem Hauptgehäuse (110) angebracht ist, elektrisch verbunden ist und ebenfalls mit dem Erdungsteil des zweiten Moduls, welches in dem Untergehäuse (120) enthalten ist, elektrisch verbunden ist.

6. Das tragbare Funktelefon (100) entsprechend Anspruch 1, wobei die Verbindungseinheit beinhaltet:
ein Metallglied (30), wobei ein erstes Ende des Metallgliedes derart an dem Hauptgehäuse (110) angebracht ist, so dass das erste Ende mit dem Erdungsteil des ersten Moduls elektrisch verbunden ist und das zweite Ende des Metallgliedes derart an dem unteren Gehäuse (120) angebracht ist, so dass das zweite Ende mit dem Erdungsteil des zweiten Moduls elektrisch verbunden ist.

7. Das tragbare Funktelefon (100) entsprechend einem der Ansprüche 1 bis 6, wobei die Verbindungseinheit an einem Teil angebracht ist, der an eine Antennenvorrichtung (150),die in dem Funktelefon (100) beinhaltet ist, angrenzt.

8. Das tragbare Funktelefon (100) entsprechend einem der Ansprüche 1 bis 7, wobei das erste Modul eine Leiterplatte ist.

9. Das tragbare Funktelefon (100) entsprechend einem der Ansprüche 1 bis 8, wobei das Zweitmodul ein LCD (Liquid Crystal Display) ist.

10. Das tragbare Funktelefon (100) entsprechend Anspruch 1, wobei die Verbindungseinheit ein Erdungsteil des ersten Moduls, das in dem Hauptgehäuse (110) enthalten ist, mit einem Erdungsteil des zweiten Moduls, das in dem Teilgehäuse (120) enthalten ist, verbindet, während das Teilgehäuse (120) vom Hauptgehäuse (110) weggefaltet ist.

## Revendications

1. Radiotéléphone portable (100) ayant un corps principal (110) comprenant un premier module, et un corps secondaire (120) comprenant un second module, dans lequel le corps secondaire est relié au corps principal de façon que le corps secondaire (120) puisse être plié contre le corps principal (110) et en être déplié, le radiotéléphone (100) comportant :
au moins un dispositif de connexion monté sur une partie où le corps principal (110) est réuni au corps secondaire (120), le dispositif de connexion connectant électriquement de façon permanente une partie de mise à la masse du premier module inclus dans le corps principal (110) à une partie de mise à masse du second module inclus dans le corps secondaire (120).

2. Radiotéléphone portable (100) selon la revendication 1, dans lequel le dispositif de connexion comporte :
un plongeur (10) à bille monté sur le corps principal (110) afin que le plongeur à bille soit connecté électriquement à la partie de mise à la masse du premier module ; et
une plaque métallique (21) montée sur le corps secondaire (120) afin que la plaque métallique (21) soit connectée électriquement au plongeur (10) à bille monté sur le corps principal (110) et soit également connectée électriquement à la partie de mise à la masse du second module inclus dans le corps secondaire (120).

3. Radiotéléphone portable (100) selon la revendication 1, dans lequel le dispositif de connexion comporte :
une plaque métallique (20) montée sur le corps principal (110) afin que la plaque métallique (20) soit connectée électriquement à la partie de mise à la masse du premier module ; et
un plongeur (10) à bille monté sur le corps secondaire (120) afin que le plongeur (10) à bille soit connecté électriquement à la plaque métallique (20) montée sur le corps principal (110) et soit également connecté électriquement à la partie de mise à la masse du second module inclus dans le corps secondaire (120).

4. Radiotéléphone portable (100) selon la revendication 1, dans lequel le dispositif de connexion comporte :
un ressort plat monté sur le corps principal (110) afin que le ressort plat soit connecté électriquement à la partie de mise à la masse du premier module ; et
une plaque métallique montée sur le corps secondaire (120) afin que la plaque métallique soit connectée électriquement au ressort plat monté sur le corps principal (110) et soit également connectée électriquement à la partie de mise à la masse du second module inclus dans le corps secondaire (120).

5. Radiotéléphone portable (100) selon la revendication 1, dans lequel le dispositif de connexion comporte :
une plaque métallique (22) montée sur le corps principal (110) afin que la plaque métallique (22) soit connectée électriquement à la partie de mise à la masse du premier module ; et
un ressort plat (11) monté sur le corps secondaire (120) de façon que le ressort plat (11) soit connecté électriquement à la plaque métallique (22) montée sur le corps principal (110) et soit également connecté électriquement à la partie de mise à la masse du second module inclus dans le corps secondaire (120).

6. Radiotéléphone portable (100) selon la revendication 1, dans lequel le dispositif de connexion comporte :
une biellette métallique (30), une première extrémité de la biellette métallique étant montée sur le corps principal (110) afin que la première extrémité soit connectée électriquement à la partie de mise à la masse du premier module, et une seconde extrémité de la biellette métallique étant montée sur le corps secondaire (120) afin que la seconde extrémité soit connectée électriquement à la partie de mise à la masse du second module.

7. Radiotéléphone portable (100) selon l'une des revendications 1 à 6, dans lequel le dispositif de connexion est monté sur une partie adjacente à un dispositif à antenne (150) inclus dans le radiotéléphone (100) .

8. Radiotéléphone portable (100) selon l'une des revendications 1 à 7, dans lequel le premier module est une plaquette à circuit imprimé.

9. Radiotéléphone portable (100) selon l'une des revendications 1 à 8, dans lequel le second module est un module d'affichage à cristaux liquides (LCD).

10. Radiotéléphone portable (100) selon la revendication 1, dans lequel le dispositif de connexion connecte électriquement une partie de mise à la masse du premier module inclus dans le corps principal (110) à une partie de mise à la masse du second module inclus dans le corps secondaire (120) tandis que le corps secondaire (120) est déplié du corps principal (110).
